# EUROPÄISCHE PATENTSCHRIFT

(11) **EP 3 332 114 B1**
(45) Veröffentlichungstag und Bekanntmachung des Hinweises auf die Patenterteilung: **16.10.2019**
(21) Anmeldenummer: 16756586.0
(22) Anmeldetag: 12.08.2016
(51) Int. Cl.: F02N 11/08, B60L 7/10, B60W 10/06, B60W 10/08, B60W 20/12

(54) **VERFAHREN FÜR DEN BETRIEB EINES START-STOPP-SYSTEMS UND KRAFTFAHRZEUG**
METHOD FOR OPERATING A START-STOP SYSTEM AND A MOTOR VEHICLE
PROCÉDÉ DE FONCTIONNEMENT D'UN SYSTÈME START-STOP ET VÉHICULE AUTOMOBILE

(30) Priorität: 25.09.2015 DE 102015012552
(43) Veröffentlichungstag der Anmeldung: 13.06.2018
(73) Patentinhaber: Audi AG, 85045 Ingolstadt (DE)
(72) Erfinder: KRUSE, Alexander, 85051 Ingolstadt (DE)
(86) Internationale Anmeldenummer: PCT/EP2016/001390
(87) Internationale Veröffentlichungsnummer: WO 2017/050411

(56) Entgegenhaltungen:
- EP-A1- 2 722 206
- WO-A1-2014/192367
- DE-A1-102013 100 036
- GB-A- 2 519 158
- US-A1- 2012 179 357
- US-A1- 2013 035 839

## Beschreibung

Die Erfindung betrifft ein Verfahren für den Betrieb eines Start-Stopp-Systems eines Kraftfahrzeugs, bei dem ein Antriebsmotor beim Unterschreiten einer Geschwindigkeitsschwelle ausgeschaltet wird. Daneben betrifft die Erfindung ein Kraftfahrzeug.

Kraftfahrzeuge werden in zunehmenden Maße mit einem Start-Stopp-System ausgerüstet, durch das ein Antriebsmotor in bestimmten Situationen automatisch abgeschaltet und zu einem späteren Zeitpunkt bei Bedarf wieder eingeschaltet wird. Ein Ausschaltvorgang kann beispielsweise ausgelöst werden, wenn ein Kraftfahrzeug an einer roten Ampel hält, währenddessen werden die elektrischen Verbraucher von einer Kraftfahrzeugbatterie versorgt. Es ist auch bereits vorgeschlagen worden, den Antriebsmotor eines Kraftfahrzeugs auszuschalten, während sich das Kraftfahrzeug in Bewegung befindet, beispielsweise während des Befahrens eines Gefälles oder während eines Bremsvorgangs bis zum Stillstand.

In der DE 10 2009 046 829 A1 wird ein Verfahren zum Ansteuern eines Motors eines fahrenden Fahrzeugs vorgeschlagen. Dabei wird eine Straßenverlaufsinformation oder eine Geschwindigkeitsinformation von einem Navigationssystem bereitgestellt. In der Abhängigkeit der Straßenverlaufsinformation und der Geschwindigkeitsinformation wird ein Abschaltvorgang des Motors ausgelöst.

Aus der DE 10 2008 064 018 A1 ist ein Verfahren für den Betrieb eines Start-Stopp-Systems bekannt, bei dem wenigstens eine Umgebungsinformation als Einflussgröße zum Verändern oder zum Beibehalten eines Betriebszustands herangezogen wird. Dieses Verfahren ist für ein Hybridfahrzeug, insbesondere für ein Mild-Hybridfahrzeug, geeignet. Unter anderem ist dort vorgesehen, dass das Ausschalten oder Einschalten eines Antriebsmotors in Abhängigkeit vom Unterschreiten oder Überschreiten einer Geschwindigkeitsschwelle erfolgt.

Die nachveröffentlichte DE 10 2014 014 293 B3 offenbart ein Verfahren zum Betreiben eines Kraftfahrzeugs mit einem Start-Stopp-System für eine Verbrennungskraftmaschine eines Kraftfahrzeugs mit einer Einrichtung zum Erfassen eines Fahrzeugvorfelds, wobei das Start-Stopp-System die Verbrennungskraftmaschine bei Unterschreiten eines Grenzwerts einer Geschwindigkeit des Kraftfahrzeugs abhängig von wenigstens einem Signal, die Fahrdynamik des Kraftfahrzeugs betreffend, außer Betrieb setzt. Dabei wird die Verbrennungskraftmaschine nicht außer Betrieb gesetzt, falls mittels der Einrichtung zum Erfassen des Fahrzeugvorfelds eine Fahrbahnunebenheit, die ein verlangsamtes Überfahren erfordert, im Fahrzeugvorfeld erfasst wird.

Aus der DE 10 2004 024 213 B4 ist ein Verfahren zur Steuerung eines Betriebs eines Kraftfahrzeugs mit einem Verbrennungsmotor und einer Start-Stopp-Automatik bekannt, die eine Abschaltautomatik, welche bei Vorliegen von Stopp-Bedingungen eine automatische Abschaltung des Verbrennungsmotors bewirkt, und eine Anschaltautomatik, die bei Vorliegen von Start-Bedingungen einen automatischen Start des Verbrennungsmotors bewirkt, umfasst. Eine erste Stopp-Bedingung liegt vor, wenn bei einer Fahrzeuggeschwindigkeit unterhalb einer vorgegebenen Geschwindigkeitsschwelle eine Betätigung des Bremspedals vorliegt, wobei die erste Stopp-Bedingung eine Fahrzeuggeschwindigkeit unterhalb einer Geschwindigkeitsschwelle oberhalb von 0 km/h umfasst und/oder die Geschwindigkeitsschwelle in Abhängigkeit von einem eingelegten Gang vorgegeben wird.

Die DE 10 2010 038 010 A1 offenbart ein Betriebsverfahren für ein Hybridfahrzeug, bei dem ein Fahren rein elektromotorisch erfolgt, sofern unter anderem eine Fahrgeschwindigkeit einen vordefinierten Grenzwert unterschreitet, welcher zeitlich variabel sein kann.

Aus der US 2012/0179357 A1 sind ein Verfahren und ein Fahrzeug mit einem Verbrennungsmotor und mit wenigstens einem Sensor zur Detektion von Fahrweginformationen bekannt. Nach dem Verfahren wird der Verbrennungsmotor während der Fahrt ausgeschaltet, wenn basierend auf den Fahrweginformationen eine Ausschaltbedingung erfüllt ist.

In der DE 11 2011 104 757 T5 sind ein Reiseplanerzeugungsverfahren und eine Reiseplanerzeugungsvorrichtung beschrieben.

Aus der DE 10 2013 100036 A1 ist ein Start-Stopp-System bekannt, indem ein Antriebsmotor in Abhängigkeit einer Geschwindigkeitsschwelle ausgeschaltet wird, wobei die Geschwindigkeitsschwelle in Abhängigkeit der Lichtfarbe einer Ampel als Umgebungsinformation erfasst wird.

Bei herkömmlichen Verfahren für den Betrieb eines Start-Stopp-Systems eines Kraftfahrzeugs besteht das Problem, dass es häufig schwierig ist, zu entscheiden, ob ein Ausschalten des Antriebsmotors momentan zweckmäßig ist oder nicht.

Der Erfindung liegt daher die Aufgabe zugrunde, eine Möglichkeit zum Betrieb eines Start-Stopp-Systems anzugeben, das eine fundierte Entscheidung hinsichtlich des Ausschaltens eines Antriebsmotors ermöglicht.

Zur Lösung dieser Aufgabe ist bei einem Verfahren der eingangs genannten Art erfindungsgemäß vorgesehen, dass die Geschwindigkeitsschwelle in Abhängigkeit wenigstens einer Umgebungsinformation festgelegt wird.

Die Erfindung beruht auf der Erkenntnis, dass ein qualitativ verbessertes Betriebsverfahren für ein Start-Stopp-System geschaffen werden kann, indem eine variable Geschwindigkeitsschwelle vorgesehen ist, die von wenigstens einer aktuellen Umgebungsinformation abhängig ist. Im Gegensatz zu herkömmlichen Verfahren, die zumeist eine feststehende Geschwindigkeitsschwelle für einen Motorstopp vorsehen, kann erfindungsgemäß flexibel auf aktuelle Fahrsituationen, Verkehrssituationen und Umgebungsinformationen reagiert werden. Somit kann das erfindungsgemäße Verfahren für den Betrieb eines Start-Stopp-Systems flexibel auf aktuelle Situationen oder Zustände reagieren und jeweils eine passende Geschwindigkeitsschwelle wählen, bei deren Unterschreitung wenigstens ein Antriebsmotor ausgeschaltet wird.

Das erfindungsgemäße Verfahren eignet sich besonders gut für Kraftfahrzeuge vom Mild-Hybrid-Typ, die einen ersten, als Brennkraftmaschine und wenigstens einen zweiten, die Brennkraftmaschine unterstützenden elektrischen Antriebsmotor aufweisen, sowie eine rekuperative Bremse und das Start-Stopp-System, das wenigstens einen Antriebsmotor beim Unterschreiten einer Geschwindigkeitsschwelle ausschaltet. Derartige Fahrzeuge vom Mild-Hybrid-Typ sind nicht in der Lage, lediglich mittels des elektrischen Motors zu fahren, dieser unterstützt hingegen die Brennkraftmaschine, wodurch eine Verringerung des Energieverbrauchs möglich ist. Im Gegensatz dazu ist ein Fahrzeug vom Full-Hybrid-Typ so konfiguriert, dass es sowohl lediglich durch die Brennkraftmaschine als auch lediglich mittels eines oder mehrerer Elektromotoren angetrieben werden kann. Die Grenze zwischen einem Fahrzeug vom Mild-Hybrid-Typ und einem Fahrzeug vom Full-Hybrid-Typ ist allerdings nicht exakt festlegbar.

Als Umgebungsinformationen, die bei dem Festlegen der Geschwindigkeitsschwelle berücksichtigt werden, kommen unterschiedliche Informationen in Frage.

In einem Speicher eines Navigationssystems gespeicherte Daten können dabei als Umgebungsinformationen berücksichtigt werden.

Insbesondere kann es sich dabei um Geschwindigkeitsinformationen handeln, das heißt um festgelegte Richtgeschwindigkeiten oder Höchstgeschwindigkeiten, die für einen bestimmten Fahrbahnabschnitt gelten. Diese Geschwindigkeitsinformationen können in dem Speicher des Navigationssystems hinterlegt sein, sodass beim oder vor dem Befahren des entsprechenden Fahrbahnabschnitts darauf zugegriffen werden kann.

Nach der Erfindung wird eine derartige, von einem Navigationssystem bereitgestellte Geschwindigkeitsbegrenzung als Umgebungsinformation berücksichtigt. Diese Berücksichtigung umfasst das Festlegen der Geschwindigkeitsschwelle für das Abschalten des Antriebsmotors in Abhängigkeit der Geschwindigkeitsbegrenzung. Die für einen bestimmten Fahrbahnabschnitt geltenden Geschwindigkeitsbegrenzung stellt somit die Höchstgeschwindigkeit dar. Die variable Motorstoppschwelle wird zweckmäßig so festgelegt, dass sie einen ausreichenden Abstand zu der Geschwindigkeitsbegrenzung, die eine Höchstgeschwindigkeit darstellt, aufweist.

Ergänzend oder alternativ sieht die Erfindung vor, dass eine von einem optischen Sensor des Kraftfahrzeugs erfasste Geschwindigkeitsbegrenzung als Umgebungsinformation berücksichtigt wird. Ein optischer Sensor kann beispielsweise als Kamera oder als Anordnung mehrerer Kameras ausgebildet sein. Mittels eines derartigen optischen Sensors kann zum Beispiel eine auf einem Schild angegebene Geschwindigkeitsbegrenzung erfasst werden.

Dadurch ergibt sich der Vorteil, dass jederzeit die tatsächlich geltende Geschwindigkeitsbegrenzung erfasst wird, selbst wenn die in einem Speicher des Navigationssystems enthaltenen Informationen nicht mehr gültig oder aktuell sind. Demnach kann durch Erfassen eines Verkehrsschilds und Auswerten der entsprechenden Informationen als Umgebungsinformation eine Anpassung der Geschwindigkeitsschwelle erfolgen.

Eine weitere Variante des erfindungsgemäßen Verfahrens sieht vor, dass über eine drahtlose Kommunikationsverbindung erhaltene Informationen wie Verkehrsinformationen oder Stauinformationen als Umgebungsinformationen oder gegebenenfalls als weitere Umgebungsinformationen berücksichtigt werden. Derartige Informationen können beispielsweise von einem zentralen Server erhalten werden, der aktuelle Verkehrsinformationen oder Stauinformationen zur Verfügung stellt. Diese können zusätzlich zu Umgebungsinformationen wie eine für den jeweiligen Fahrbahnabschnitt geltende Höchstgeschwindigkeit berücksichtigt werden. Derartige Verkehrsinformationen oder Stauinformationen können alternativ oder zusätzlich auch von einem lokalen Server oder Sender bezogen werden, der beispielsweise lediglich Informationen zu einem lokal begrenzten Fahrbahnbereich übermittelt. Beispielsweise kann ein derartiger Server oder Sender an Einfallstraßen einer Stadt positioniert sein und Verkehrsinformationen oder Stauinformationen für Fahrzeuge zur Verfügung stellen, die die Straße passieren. Diese Verkehrsinformationen oder Stauinformationen können mit weiteren Umgebungsinformationen wie einer geltenden Höchstgeschwindigkeit fusioniert oder gemeinsam bei der Festlegung einer angepassten Geschwindigkeitsschwelle berücksichtigt werden.

Bei dem erfindungsgemäßen Verfahren kann es beispielsweise vorgesehen sein, dass bei einer Geschwindigkeitsbegrenzung auf 50 km/h oder 70 km/h die Geschwindigkeitsschwelle für das Ausschalten des Antriebsmotors auf 25 km/h festgelegt wird. Wenn sich ein Fahrzeug auf einem Fahrbahnabschnitt befindet, dessen Höchstgeschwindigkeit 50 km/h oder 70 km/h beträgt und sich das Fahrzeug lediglich mit 25 km/h fortbewegt, kann davon ausgegangen werden, dass der Fahrer das Fahrzeug absichtlich abbremst, da ein Stillstand geplant ist. In dieser Situation kann die variabel festlegbare Motorstoppschwelle auf 25 km/h festgelegt werden, sodass der Antriebsmotor beim Unterschreiten dieser Geschwindigkeitsschwelle ausgeschaltet wird, wodurch sich eine Einsparung von Antriebsenergie ergibt.

In analoger Weise kann davon ausgegangen werden, dass ein Fahrer, der sein Fahrzeug lediglich mit einer Geschwindigkeit von 10 km/h oder weniger bewegt oder es auf diese Geschwindigkeit abgebremst hat, beabsichtigt, das Fahrzeug zum Stillstand zu bringen. In dieser Situation kann daher der Antriebsmotor ausgeschaltet werden. Bei dem erfindungsgemäßen Verfahren kann mithin vorgesehen sein, dass die Geschwindigkeitsschwelle für das Ausschalten des Antriebsmotors bei einer Geschwindigkeitsbegrenzung von 30 km/h auf 10 km/h festgelegt wird. Dementsprechend wird die Motorstoppschwelle jeweils variabel in Abhängigkeit einer geraden durchfahrenen Geschwindigkeitszone, das heißt in Abhängigkeit der für den jeweils befahrenen Fahrbahnabschnitt geltenden Höchstgeschwindigkeit, festgelegt.

Bei dem erfindungsgemäßen Verfahren kann es vorgesehen sein, dass die Geschwindigkeitsschwelle in einem verkehrsberuhigten Bereich soweit reduziert wird, dass das Ausschalten des Antriebsmotors erst im Stillstand erfolgt. In einem verkehrsberuhigten Bereich darf lediglich mit Schrittgeschwindigkeit gefahren werden. Es ist daher sinnvoll die Geschwindigkeitsschwelle beim Befahren eines verkehrsberuhigten Bereichs auf 0 km/h zu reduzieren. Nach dem Passieren des verkehrsberuhigten Bereichs kann die variable Motorstoppschwelle jedoch wieder erhöht werden, entsprechend der für den dann befahrenen Fahrbahnabschnitt geltenden Höchstgeschwindigkeit.

Daneben betrifft die Erfindung ein Kraftfahrzeug, mit einem ersten als Brennkraftmaschine und wenigstens einem zweiten die Brennkraftmaschine unterstützenden elektrischen Antriebsmotor, einer rekuperativen Bremse und einem Start-Stopp-System, das zum Ausschalten wenigstens eines Antriebsmotors beim Unterschreiten einer Geschwindigkeitsschwelle ausgebildet ist.

Das erfindungsgemäße Kraftfahrzeug zeichnet sich dadurch aus, dass es eine Steuerungseinrichtung aufweist, die dazu ausgebildet ist, die Geschwindigkeitsschwelle in Abhängigkeit wenigstens einer Umgebungsinformation festzulegen. Somit wird die Geschwindigkeitsschwelle variabel unter Berücksichtigung aktueller Umgebungsinformationen festgelegt, beispielsweise in Abhängigkeit einer geltenden Höchstgeschwindigkeit, in Abhängigkeit eines erfassten Verkehrsschilds oder in Abhängigkeit von Verkehrsinformationen oder Stauinformationen. Optional weist das Kraftfahrzeug eine rekuperative Bremse auf.

Die Erfindung wird nachfolgend anhand von Ausführungsbeispielen unter Bezugnahme auf die Zeichnungen erläutert.

Die Zeichnungen sind schematische Darstellungen und zeigen:
- Fig. 1: ein erfindungsgemäßes Kraftfahrzeug, das zur Durchführung des erfindungsgemäßen Verfahrens ausgebildet ist; und
- Fig. 2: ein Flussdiagramm, das die wesentlichen Schritte des erfindungsgemäßen Verfahrens zeigt.

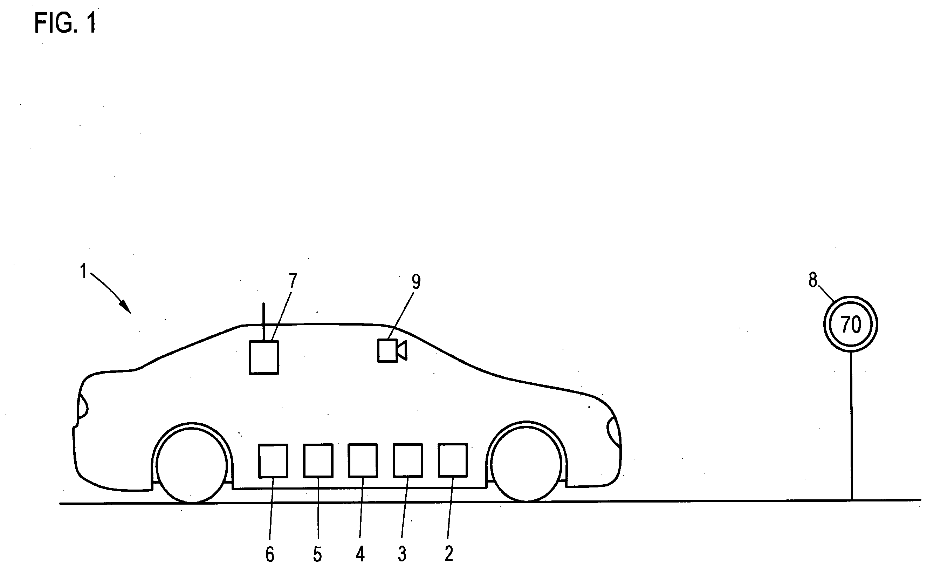

Bei dem in Fig. 1 gezeigten Kraftfahrzeug 1 handelt es sich um ein Hybridfahrzeug vom Mild-Hybrid-Typ, mit einem ersten, als Brennkraftmaschine 2 und einem zweiten, als Elektromotor 3 ausgebildeten Antriebsmotor. Das Kraftahrzeug 1 umfasst eine rekuperative Bremse, so dass Bremsenergie in elektrische Energie und nachfolgend in chemische Energie umgewandelt werden kann, die in einer aufladbaren Batterie 4 gespeichert wird.

Das Kraftfahrzeug 1 ist mit einem schematisch dargestellten Start-Stopp-System 5 versehen, das einen oder vorzugsweise beide Antriebsmotoren beim Unterschreiten einer Geschwindigkeitsschwelle ausschaltet. Das Start-Stopp-System 5 umfasst eine Steuerungseinrichtung 6, die dazu ausgebildet ist, die Geschwindigkeitsschwelle in Abhängigkeit wenigstens einer Umgebungsinformation festzulegen.

Daneben umfasst das Kraftfahrzeug eine Empfangseinrichtung 7 die mit einer Antenne 8 gekoppelt ist. Über die Empfangseinrichtung 7 kann das Kraftfahrzeug 1 Umgebungsinformationen wie Verkehrsinformationen oder Stauinformationen empfangen, die drahtlos von einem Sender (nicht gezeigt) ausgesendet werden. In Übereinstimmung mit einem herkömmlichen Kraftfahrzeug ist das Start-Stopp-System 5 so ausgebildet, dass wenigstens einer der beiden Antriebsmotoren, vorzugsweise beide Antriebsmotoren, nämlich die Brennkraftmaschine 2 und der Elektromotor 3, beim Unterschreiten einer festgelegten Geschwindigkeitsschwelle ausgeschaltet wird beziehungsweise werden. Darüber hinaus ist bei dem Kraftfahrzeug 1 vorgesehen, dass die Geschwindigkeitsschwelle in Abhängigkeit wenigstens einer Umgebungsinformation festgelegt wird.

In Figur 1 erkennt man, das sich das Kraftfahrzeug einem Verkehrsschild 8 nähert, das von einem schematisch dargestellten optischen Sensor 9, der als Kamera ausgebildet ist, erfasst wird. Ein von der Kamera erfasstes Bild wird ausgewertet, sodass die Bedeutung des Verkehrsschilds 8 erfasst werden kann. Dieser Bedeutungsgehalt des Verkehrsschilds 8 wird als aktuelle Umgebungsinformation bei der Festlegung der variablen Geschwindigkeitsschwelle für das Abschalten des Antriebsmotors berücksichtigt.

Zusätzlich ist das Start-Stopp-System 5 in der Lage, über seine Empfangseinrichtung 7 Verkehrsinformationen drahtlos zu empfangen. Diese Verkehrsinformationen werden als weitere Umweltinformationen berücksichtigt. Diese geben an, ob beziehungsweise auf welchen Streckenabschnitten oder Fahrbahnabschnitten eine Verkehrsstörung wie zähfließender Verkehr oder ein Stau vorhanden ist. Diese Verkehrsinformationen können weitere Detailinformationen umfassen, beispielsweise eine aktuelle Durchschnittsgeschwindigkeit der Verkehrsteilnehmer, die Länge des Staus, sowie die Information, ob der Stau zunimmt oder abnimmt. Diese Informationen werden zusammen mit der das Verkehrsschild 8 betreffenden Information ausgewertet. Die Steuerungseinrichtung 6 berücksichtigt diese unterschiedlichen Umweltinformationen und modifiziert die variable Motor-Stopp-Schwelle. Bei ungehindert fließendem Verkehr wird davon ausgegangen, dass sich die meisten Verkehrsteilnehmer mit einer Geschwindigkeit zwischen der auf dem Verkehrsschild 8 angegebenen Höchstgeschwindigkeit und einer niedrigeren Geschwindigkeit fortbewegen. Der untere Geschwindigkeitswert kann beispielsweise 20 km/h unterhalb der Höchstgeschwindigkeit liegen. Wenn der Fahrer des Kraftfahrzeugs 1 diese untere Geschwindigkeit unterschreitet, wird davon ausgegangen, dass er das Kraftfahrzeug 1 bis zum Stillstand abbremsen möchte. Daher kann die Geschwindigkeitsschwelle auf 50 km/h oder einen niedrigeren Wert, beispielsweise 45 km/h, reduziert werden. Wenn allerdings über die Empfangseinrichtung 7 Verkehrsinformationen empfangen wurden, gemäß denen sich auf dem Fahrweg vor dem Kraftfahrzeug 1 zähflüssiger Verkehr befindet, reduziert die Steuerungseinrichtung 6 des Start-Stopp-Systems 5 die Geschwindigkeitsschwelle von 45 km/h auf 20 km/h, da bei zähflüssigem Verkehr häufige Ausschaltvorgänge des Antriebsmotors unerwünscht beziehungsweise energetisch nicht sinnvoll sind.

Das Start-Stopp-System 5 überwacht permanent über bordeigene Sensoren erfasste Umweltinformationen sowie mittels der Empfangseinrichtung 7 drahtlos empfangene Umweltinformationen und passt die Motorstoppschwelle in Abhängigkeit der aktuellen Fahrsituation, der aktuellen Verkehrssituation und in Abhängigkeit des geplanten Fahrwegs an, um unnötige Motorstopps zu vermeiden. Das Kraftfahrzeug 1 umfasst einen riemengetriebenen Starter-Generator, der die Funktion eines elektrischen Anlassers und eines Generators vereint.

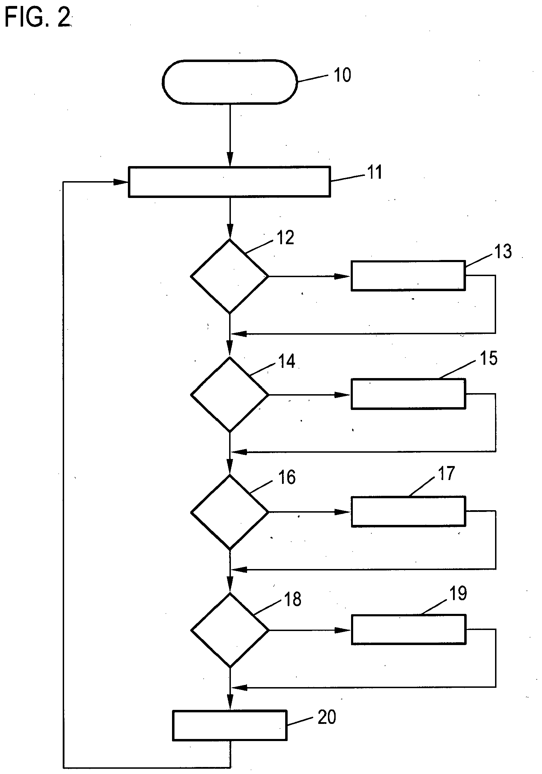

Das Verfahren für den Betrieb des Start-Stopp-Systems wird nachfolgend anhand des Flussdiagramms von Fig. 2 erläutert. Nach dem Start 10 des Verfahrens werden im Schritt 11 Umweltinformationen erfasst. Zunächst wird in Schritt 12 geprüft, ob ein bordeigenes Navigationssystem Umgebungsinformationen des aktuell befahrenen Fahrbahnabschnitts aufweist. Sofern in dem Schritt 12 festgestellt worden ist, dass entsprechende Geschwindigkeitsinformationen in einem Speicher des Navigationsgeräts hinterlegt sind, wird die dem Fahrbahnabschnitt zugeordnete Höchstgeschwindigkeit im Schritt 13 erfasst. Diese Höchstgeschwindigkeit wird als Umgebungsinformation bei der Festlegung der Geschwindigkeitsschwelle für das Abschalten des Antriebsmotors berücksichtigt.

Nachfolgend wird im Schritt 14 geprüft, ob ein oder mehrere Verkehrszeichen 8 erfasst werden können. Im Schritt 15 wird eine aktuell geltende Höchstgeschwindigkeit durch eine Bildauswertung des aufgenommenen Verkehrszeichens erfasst, wie im Zusammenhang mit Fig. 1 beschrieben wurde. Bei einem Widerspruch, das heißt, wenn die aus den Navigationsdaten ermittelte Höchstgeschwindigkeit und die durch die Verkehrszeichenauswertung ermittelte Höchstgeschwindigkeit voneinander abweichen, wird die durch die Verkehrszeichenauswertung erfasste Höchstgeschwindigkeit berücksichtigt, da davon ausgegangen wird, dass diese eine höhere Glaubwürdigkeit und Aktualität besitzt.

Im Schritt 16 wird geprüft, ob Umgebungsinformationen in Form von Verkehrsinformationen vorliegen oder abgerufen werden können. Wie bereits erläutert wurde, können derartige Informationen mittels der Empfangseinrichtung 7 über eine drahtlose Kommunikationsverbindung empfangen werden. In einer abgewandelten Form kann es sich dabei auch um ungerichtet ausgesendete Verkehrsinformationen handeln. Sofern derartige Verkehrsinformationen im Schritt 16 empfangen werden, werden diese im Schritt 17 als weitere Umweltinformationen bei der nachfolgenden Festlegung oder Anpassung der Geschwindigkeitsschwelle berücksichtigt.

Schließlich wird im Schritt. 18 geprüft, ob Stauinformationen vorhanden sind oder abgerufen werden können. Bejahendenfalls werden derartige Stauinformationen im Schritt 19 als weitere Umweltinformationen für die Festlegung der Geschwindigkeitsschwelle berücksichtigt.

Nachfolgend wird im Schritt 20 die Geschwindigkeitsschwelle, das heißt die variable Motorstoppschwelle in Abhängigkeit aller erhaltenen und erfassten Umweltinformationen festgelegt. In erster Linie gehen in die Berechnung der Motorstoppschwelle Informationen zu Geschwindigkeitszonen insbesondere eine erfasste Höchstgeschwindigkeit ein. Bei einer Geschwindigkeitsbegrenzung auf 50 km/h oder 70 km/h wird die Geschwindigkeitsschwelle für das Ausschalten des Antriebsmotors auf 25 km/h festgelegt. Bei einer festgelegten Höchstgeschwindigkeit für den aktuell befahrenen Fahrbahnabschnitt von 30 km/h wird die Geschwindigkeitsschwelle auf 10 km/h festgelegt. In einem verkehrsberuhigten Bereich wird die Geschwindigkeitsschwelle auf 0 km/h reduziert, sodass das Ausschalten erst im Stillstand erfolgt. Darüber hinaus gehen aktuelle, erfasste oder empfangene Verkehrsinformationen und/oder Stauinformationen in die Berechnung der Geschwindigkeitsschwelle ein. Diese Geschwindigkeitsschwelle bildet anschließend die Grundlage für das Ausschalten des oder der Antriebsmotoren durch das Start-Stopp-System 5. Anschließend verzweigt das in Fig. 2 gezeigte Verfahren wieder zum Schritt 11, in dem Umweltinformationen erfasst werden und das Verfahren wird erneut durchlaufen.

Das beschriebene Kraftfahrzeug und das beschriebene Verfahren weisen den Vorteil auf, dass ein Motorstopp stets in Abhängigkeit von aktuellen Umgebungsinformationen durchgeführt wird, wodurch Motorstopps, die nicht zu einer Einsparung von Energie führen, vermieden werden.

## Patentansprüche

1. Verfahren für den Betrieb eines Start-Stopp-Systems (5) eines Kraftfahrzeugs (1), bei dem ein Antriebsmotor beim Unterschreiten einer Geschwindigkeitsschwelle ausgeschaltet wird, wobei die Geschwindigkeitsschwelle in Abhängigkeit wenigstens einer Umgebungsinformation festgelegt wird,
**dadurch gekennzeichnet,**
**dass** eine von einem Navigationssystem bereitgestellte und/oder eine von einem optischen Sensor (9) des Kraftfahrzeugs (1) erfasste Geschwindigkeitsbegrenzung als Umgebungsinformation berücksichtigt wird.

2. Verfahren nach Anspruch 1,
**dadurch gekennzeichnet,**
**dass** bei einer Geschwindigkeitsbegrenzung auf 50 km/h oder 70 km/h die Geschwindigkeitsschwelle für das Ausschalten des Antriebsmotors auf 25 km/h festgelegt wird.

3. Verfahren nach Anspruch 1 oder 2,
**dadurch gekennzeichnet,**
**dass** die Geschwindigkeitsschwelle für das Ausschalten des Antriebsmotors bei einer Geschwindigkeitsbegrenzung von 30 km/h auf 10 km/h festgelegt wird.

4. Verfahren nach einem der vorangehenden Ansprüche,
**dadurch gekennzeichnet,**
**dass** die Geschwindigkeitsschwelle in einem verkehrsberuhigten Bereich soweit reduziert wird, dass das Ausschalten des Antriebsmotors erst im Stillstand erfolgt.

5. Verfahren nach einem der vorangehenden Ansprüche,
**dadurch gekennzeichnet,**
**dass** über eine drahtlose Kommunikationsverbindung erhaltene Informationen als Umgebungsinformationen berücksichtigt werden.

6. Kraftfahrzeug (1) mit einem ersten als Brennkraftmaschine (2) und wenigstens einem zweiten die Brennkraftmaschine (2) unterstützenden elektrischen Antriebsmotor, einer rekuperativen Bremse und einem Start-Stopp-System (5), das zum Ausschalten wenigstens eines Antriebsmotors beim Unterschreiten einer Geschwindigkeitsschwelle ausgebildet ist, wobei es eine Steuerungseinrichtung (6) aufweist, die dazu ausgebildet ist, die Geschwindigkeitsschwelle in Abhängigkeit wenigstens einer Umgebungsinformation festzulegen,
**dadurch gekennzeichnet,**
**dass** die Steuerungseinrichtung (6) ferner dazu ausgebildet ist, eine von einem Navigationssystem bereitgestellte und/oder eine von einem optischen Sensor (9) des Kraftfahrzeugs (1) erfasste Geschwindigkeitsbegrenzung als Umgebungsinformation zu berücksichtigen.

## Claims

1. Method for operating a start-stop system (5) of a motor vehicle (1), in which a drive motor is cut off when the speed falls below a speed threshold, wherein the speed treshold is set based at least on environment information,
**characterised in that**
a speed limit provided by a navigation system and/or detected by an optical sensor (9) of the motor vehicle (1) is considered as environmental information.

2. Method according to claim 1,
**characterised in that**
at a speed limit of 50 km/h or 70 km/h the speed threshold for cutting off the drive motor is set at 25 km/h.

3. Method according to claim 1 or 2,
**characterised in that**
the speed threshold for cutting off the drive motor at a speed limit of 30 km/h is set at 10 km/h.

4. Method according to any of the preceding claims,
**characterised in that**
the speed threshold in a traffic-calmed area is reduced so far that the drive motor is not cut off until the standstill of the motor vehicle.

5. Method according to any of the preceding claims,
**characterised in that**
information acquired via a wireless communication connection is considered as environment information.

6. Motor vehicle (1) with a first drive motor in form of an internal combustion engine (2) and at least one second electric drive motor supporting the internal combustion engine (2), a recuperative brake and a start-stop system (5) which is configured to cut off at least one drive motor when the speed falls below a speed threshold, wherein it has a control device (6) which is configured to set the speed threshold based at least on environmental information,
**characterised in that**
the control device (6) is further configured to take into account as environmental information a speed limit provided by a navigation system and/or a speed limit detected by an optical sensor (9) of the motor vehicle (1).

## Revendications

1. Procédé destiné au fonctionnement d'un système start-stop (5) d'un véhicule automobile (1), dans lequel un moteur d'entraînement est éteint en cas de dépassement négatif d'un seuil de vitesse, dans lequel le seuil de vitesse est déterminé en fonction d'au moins une information d'environnement,
**caractérisé en ce que**
une limitation de vitesse fournie par un système de navigation et/ou détectée par un capteur optique (9) du véhicule automobile (1) est prise en compte en tant qu'information d'environnement.

2. Procédé selon la revendication 1,
**caractérisé en ce que**
dans le cas d'une limitation de vitesse de 50 km/h ou 70 km/h, le seuil de vitesse pour l'extinction du moteur d'entraînement est fixé à 25 km/h.

3. Procédé selon la revendication 1 ou 2,
**caractérisé en ce que**
le seuil de vitesse pour l'extinction du moteur d'entraînement est fixé à 10 km/h dans le cas d'une limitation de vitesse de 30 km/h.

4. Procédé selon l'une quelconque des revendications précédentes,
**caractérisé en ce que**
le seuil de vitesse est réduit dans une zone où la circulation est calme dans la mesure où l'extinction du moteur d'entraînement n'intervient qu'à l'arrêt.

5. Procédé selon l'une quelconque des revendications précédentes,
**caractérisé en ce que**
des informations obtenues par l'intermédiaire d'une liaison de communication sans fil sont prises en compte en tant qu'informations d'environnement.

6. Véhicule automobile (1) avec un premier moteur d'entraînement électrique en tant que moteur à combustion interne (2) et au moins un second moteur d'entraînement électrique assistant le moteur à combustion interne (2), un frein à récupération et un système start-stop (5) conçu pour éteindre au moins un moteur d'entraînement en cas de dépassement négatif d'un seuil de vitesse, dans lequel ledit système présente un dispositif de commande (6) conçu pour fixer le seuil de vitesse en fonction d'au moins une information d'environnement,
**caractérisé en ce que**
le dispositif de commande (6) est en outre conçu pour prendre en compte en tant qu'information d'environnement une limitation de vitesse fournie par un système de navigation et/ou détectée par un capteur optique (9) du véhicule automobile (1).
